Europäisches Patentamt

European Patent Office

Office européen des brevets

(19)

(11) Veröffentlichungsnummer: **0 407 882 A1**

(12) **EUROPÄISCHE PATENTANMELDUNG**

(21) Anmeldenummer: 90112784.5

(22) Anmeldetag: 04.07.90

(51) Int. Cl.⁵: **G07C 9/00**, G10L 5/06, G07F 7/10

(30) Priorität: 11.07.89 DE 3922801

(43) Veröffentlichungstag der Anmeldung:
16.01.91 Patentblatt 91/03

(84) Benannte Vertragsstaaten:
AT BE CH DE ES FR GB IT LI LU NL

(71) Anmelder: **Siemens Aktiengesellschaft**
**Wittelsbacherplatz 2**
**D-8000 München 2(DE)**

(72) Erfinder: **Jahn, Alfred, Dipl.-Ing.**
**Winkstrasse 8**
**D-8000 München 70(DE)**

(54) **Anordnung zur Verifikation einer Systemzugangsberechtigung einer Person.**

(57) Am Zugangsort ist ein digitales Endgerät (E) mit einem Mikrophon und einer ID-Chipkartenleseeinrichtung (K) vorgesehen. Auf einer ID-Chipkarte (IDC) sind die personenindividuellen Sprachmuster bestimmter Begriffe digital codiert gespeichert und werden mit den von der Person am Zugangsort in das Mikrophon eingesprochenen verglichen. Zur Gewinnung von Sprachpegelwerten aus dem vom Mikrophon abgegebenen Sprachsignal dient eine definierte Abtastfrequenz. Nach Zwischenspeicherung im digitalen Endgerät (E) werden die Sprachpegelwerte mit einer kleineren, vorzugsweise der halben Abtastfrequenz entsprechenden Ausleserate über eine Leitung bestehend aus einem Signalisierungskanal und wenigstens einem Nutzdatenkanal an eine zentrale Auswerteeinrichtung (Z) übertragen, die den Vergleich ausführt.

EP 0 407 882 A1

## ANORDNUNG ZUR VERIFIKATION EINER SYSTEMZUGANGSBERECHTIGUNG EINER PERSON

Aus dem AT&T Technical Journal, Sept./Okt. 1986, Vol. 65, Issue 5, Seiten 68 bis 74, ist ein System zur Prüfung der Zugangsberechtigung von Personen zu bestimmten Systemen bekannt. Die Überprüfung erfolgt derart, daß am Zugangsort in ein Terminal eine Identifikationsnummer einzugeben ist und ein aus mehreren Passworten bestehender Satz zu sprechen ist. Die Sprachproben werden über das Telefonnetz an eine Zentrale übertragen und dort einer Sprachverifikationseinrichtung zugeführt. In dieser Einrichtung werden für die eintreffenden Sprachsignale zunächst Autokorrelationskoeffizienten berechnet, die anschließend in LPC (Linear Predictive Coding)-Koeffizienten umgewandelt werden. Diese Koeffizienten werden nach der sogenannten CEPSTRUM-Technik modifiziert; die so modifizierten Koeffizienten werden nach wenigstens einer weiteren, durch die nicht zu vermeidende Verzerrung im Übertragungsweg bedingten Korrektur zum Vergleich mit einem in gleicher Form gespeicherten Sprachmuster der durch die Identifikationszahl ausgewiesenen Person verglichen.

Eine solche Zugangskontrolle bietet gegenüber der Prüfung der Zugangsberechtigung lediglich durch Abfrage einer Identifikationsnummer einen erheblichen Gewinn an Sicherheit, da die Sprachcharakteristika der Sprachproben unterschiedlicher Sprecher ähnlich individualisiert wie Fingerabdrükke verschiedener Personen sind.

Bei einer großen Zahl von Personen, denen bedarfsweise Zugang zu bestimmten Systemen gewährt werden sollen, kann der Speicherbedarf zur Abspeicherung solcher Passwörter ein wirtschaftlich nicht mehr vertretbares Ausmaß annehmen. Dies gilt insbesondere dann, wenn - wie an sich bekannt - mehrere Passwörter je zugangsberechtigter Person hinterlegt sind, wobei durch geeignete Anzeigeeinrichtungen - Display oder Bildschirm - den betreffenden Personen nach einem Zufallsprinzip ausgewählte Passwörter aus der Gesamtmenge derselben zum Nachsprechen angeboten werden. Zumindest erzwänge die bei großer Zahl von zugangsberechtigten Personen zu speichernde Fülle von Informationen die Beschränkung auf einmaliges zentrales Speichern. Dies würde z. B. bei einem überregional agierenden Bankinstitut für seine Bargeldausgabeautomaten bedeuten, daß über das öffentliche Fernsprechnetz nicht nur Orts-, sondern auch Fernverbindungen aufzubauen wären; die dabei anfallenden Fernsprechgebühren sind für einen solchen Anwendungsfall - trotz angestrebter hoher Sicherheit - nicht tragbar.

Aus der US-4 827 518 ist ein Verifikationssystem bekannt, bei dem jeder zugangsberechtigten Person eine IC-Karte (Integrated Circuit Card) zur Verfügung gestellt wird, auf der die personenindividuellen Sprachcharakteristika gespeichert sind. Die IC-Karte wird für einen Authentizitätsnachweis in eine IC-Leseeinrichtung eines an ein Kommunikationssystem angeschlossenen Endgerätes eingeführt und die betreffende Person spricht nach optischer oder akustischer Aufforderung ein oder mehrere Begriffe in ein Mikrophon. Im Endgerät werden aus den in das Mikrophon gesprochenen Begriffen digital codierte Sprachmuster gewonnen und mit den aus der IC-Karte ausgelesenen personenindividuellen Sprachmustern verglichen. Bei einer Übereinstimmung erhält die betreffende Person Zugang zum Kommunikationssystem.

Aufgabe der vorliegenden Erfindung ist es, zur Durchführung eines Verfahrens nach der zuletzt genannten Art eine Anordnung anzugeben, die einen relativ geringen technischen Aufwand erfordert und zudem eine hohe Fälschungssicherheit gewährleistet.

Gelöst wird diese Aufgabe ausgehend von den Merkmalen des Oberbegriffs des Patentanspruchs 1 durch die im kennzeichnenden Teil des Patentanspruchs 1 angegebenen Merkmale.

Vorteilhaft ist es, den Vergleich der digital codierten Sprachmuster in einer zentralen Auswerteeinrichtung durchzuführen, da die Endgeräte damit relativ einfach gehalten werden können. Ins besondere bietet sich eine erfindungsgemäße Anordnung in den Fällen an, in denen ein Verifikationsverfahren in einem bereits bestehenden System implementiert werden soll, da sich die vorhandenen und in der Regel einfachen Endgeräte entweder ohne oder nach einer geringfügigen Modifikation als Endgeräte gemäß der erfindungsgemäßen Anordnung verwenden lassen.

Mit einer zentralen Auswerteeinrichtung können Intrusionsversuche, die mit Hilfe von manipulierten Endgeräten erfolgen, sicher erkannt und vereitelt werden.

Eine weitgehende Einbettung der erfindungsgemäßen Anordnung in bestehende Einrichtungen und Prozeduren der zeitgemäßen Fernsprechtechnik erfolgt vorteilhafterweise derart, daß die Verbindung der digitalen Endgeräte mit der zentralen Auswerteeinrichtung über eine Leitung mit einem Signalisierungskanal und wenigstens einem Nutzdatenkanal erfolgt. Über den Signalisierungskanal wird dabei die Verbindung zwischen dem jeweiligen Endgerät und der zentralen Auswertetung durchgeschaltet, während die Sprachinformationen und gegebenenfalls die Textinformationen über die nachzusprechenden Begriffe über den Nutzdatenkanal übertragen werden. Die Auswahl und Anzeige des nachzusprechenden Begriffes kann z. B. dadurch erfolgen, daß die in der ID-Chipkarte gespeicherten begriffsbestimmenden Informationen von der ID-Chipkartenleseeinrichtung ausgelesen und an die zentrale Auswerteeinrichtung übertragen werden. Ein in dieser angeordneter Zufallsgenerator bestimmt dann den nachzusprechenden Begriff und leitet diesen über den Nutzdatenkanal an einen Bildschirm am Zugangsort weiter. Ein solcher Bildschirm gehört in vielen Terminals, insbesondere privater Bankinstitute, bereits zur Regelausstattung.

Als weiterer wesentlicher Vorteil ist zu erwähnen, daß die erfindungsgemäße Anordnung auch bei Beibehaltung der für ISDN-Netze üblichen PCM-Codierung eine Mitberücksichtigung von Sprachanteilen in Frequenzbereichen erreicht, die üblicherweise über ISDN-Verbindungen nicht übertragbar sind, nämlich dadurch, daß aus dem vom Mikrophon abgegebenen Sprachsignal mit einer definierten Abtastfrequenz Sprachpegelwerte gewonnen, zwischengespeichert und mit einer Ausleserate, die einer kleineren, vorzugsweise der halben Abtastfrequenz entspricht, an die zentrale Auswerteeinrichtung übertragen werden. Als definierte Abtastfrequenz ist dabei diejenige Abtastfrequenz zu verstehen, die bei der Einspeicherung der personenindividuellen Sprachmuster in die ID-Chipkarte zur Bildung der Sprachpegelwerte verwendet wurde.

Vorteilhafte Weiterbildungen der Erfindung sind in den Unteransprüchen angegeben.

Für die Verbindung der Endgeräte mit der zentralen Auswerteeinrichtung ist eine ISDN-Verbindung von Vorteil, da dieser Verbindungstyp im Bereich der Kommunikationstechnik weit verbreitet ist und als Standardverbindung häufig bereits zur Verfügung steht.

Die erfindungsgemäße Anordnung eignet sich besonders für die Verifikation einer Systemzugangsberechtigung für ein Kommunikationssystem, bei dem die Endgeräte Fernsprechendgeräte sind. Als zentrale Auswerteeinrichtung dient dabei die Vermittlungseinrichtung. Da die zentrale Auswerteeinrichtung bzw. Vermittlungseinrichtung nicht mit einem großen Speichervolumen belastet ist, in dem die Sprachmuster sämtlicher an sich zugangsberechtigter Personen abgespeichert sind, können kleinere regionale Systeme mit jeweils einer zentralen Auswerteeinrichtung realisiert werden. Insbesondere kann damit vermieden werden, daß den Ortsamtsbereich verlassende Verbindungen über das öffentliche Fernsprechnetz aufgebaut werden müssen.

Die Erfindung wird im folgenden anhand eines schematisch dargestellten Ausführungsbeispiels erläutert.

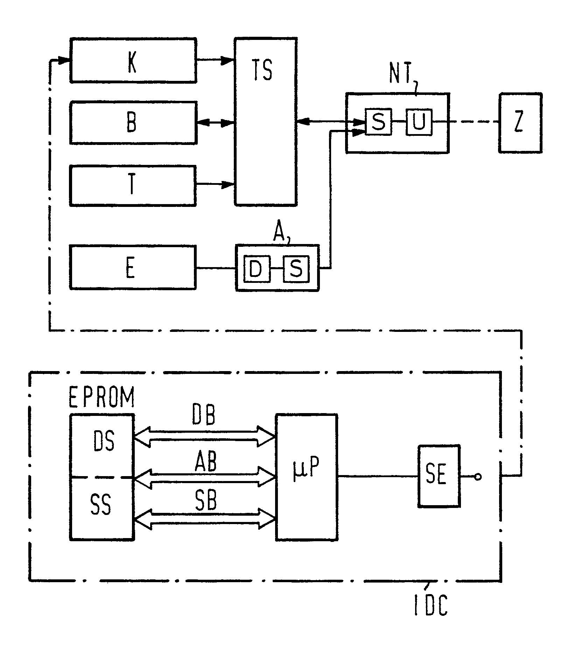

In der Figur sind die wesentlichen Bestandteile eines Bedienterminals dargestellt, an dem Kontostände von Bankkonten abgefragt und Bargeldauszahlungen vorgenommen werden können. Die notwendigen Eingaben werden mittels einer Tastatur T durchgeführt, die dazugehörigen Anzeigen erfolgen über einen Bildschirm B. Eine Kartenleseeinrichtung K dient zur Aufnahme und Abfrage von ID-Chipkarten IDC, deren Informationen über ein Lese-/Schreibsystem - nicht dargestellt - der Kartenleseeinrichtung K einer Terminal-Steuereinrichtung S zugeführt werden. Das Terminal beinhaltet darüberhinaus die für eine Sprachkommunikation wenigstens in Richtung auf eine zentrale Auswerteeinrichtung Z notwendigen Bestandteile, darunter ein Mikrophon. Die Sprachinformationen werden über eine Anpassungseinrichtung A, die im wesentlichen eine Protokollsteuereinrichtung D für den D-Kanal einer ISDN-Verbindung und einen Schnittstellenbaustein S enthält, an eine Netzabschlußeinrichtung NT abgegeben. Diese Netzabschlußeinrichtung NT enthält neben einem dem der Anpassungseinrichtung A entsprechenden Schnittstellenbaustein S einen Übertragungsbaustein U, der beispielsweise als SLMD (Subscriber Line Module Digital)-Baustein ausgeführt ist.

Auf der ID-Chipkarte IDC sind in einem Speicher EPROM Speicherbereiche DS und SS gebildet. In den Speicherbereich DS sind Daten, wie z. B. eine personenindividuelle Kennummer (PIN), gespeichert, während im Speicherbereich SS mehrere Sprachbegriffe (Passwörter) gespeichert sind. Die Kommunikation mit der Lese-/Schreibeinrichtung der Kartenleseeinrichtung K erfolgt über einen Mikroprozessor µP bzw. eine nachgeschaltete Schnittstelleneinrichtung SE. Die Verbindung zwischen dem Speicher EPROM und dem Mikroprozessor µP erfolgt über einen Datenbus DB, einen Adreßbus AB und einen Steuerbus SB.

Die Überprüfung einer Zugangsberechtigung erfolgt nach Einführen der ID-Chipkarte IDC in die Kartenleseeinrichtung K durch nachfolgendes Eingeben der personenindividuellen Kennziffer mittels der Tastatur T. Mit Hilfe der Terminalsteuerung TS wird diese eingegebene Kennziffer mit einer aus dem Speicherbereich DS der ID-Chipkarte IDC ausgelesenen personenindividuellen Kennziffer verglichen. Bei Übereinstimmung erfolgt eine Aktivierung der Verbindung des Terminals mit der zentralen Auswerteeinrichtung Z über die ISDN-Verbindung derart, daß sämtliche im Spei cherbereich SS des Speichers EPROM gespeicherten Sprachbegriffe an die zentrale Auswerteeinrichtung Z übertragen werden. Mit Hilfe eines Zufallsgenerators wählt die zentrale Auswerteeinrichtung Z eine bestimmte Anzahl von solchen Sprachbegriffen aus und überträgt diese in rückwärtiger Richtung auf das Terminal, wo diese Begriffe in entsprechender Reihenfolge auf dem Bildschirm B angezeigt werden. Die Bedienungsperson spricht daraufhin diese Begriffe nach; es erfolgt dann eine digitale Sprachübertragung über die ISDN-Verbindung zur zentralen Auswerteeinrichtung Z. Dort werden die durch entsprechende Modifikation gewonnenen Sprachcharakteristika mit denen der aus der ID-Chipkarte IDC ausgelesenen entsprechenden Begriffe verglichen. Bei Übereinstimmung der Charakteristika wird das System für eine weitergehende Benutzung durch die Bedienungsperson freigegeben.

**Ansprüche**

1. Anordnung zur Verifikation einer Systemzugangsberechtigung einer Person, mit einem am Zugangsort vorgesehenen Mikrophon zum Einsprechen eines Begriffes, aus dem ein digital codiertes Sprachmuster gewonnen wird, und mit einer am Zugangsort in eine ID-Chipkartenleseeinrichtung (K) einführbaren ID-Chipkarte (IDC), auf der ein zum Vergleich mit dem Sprachmuster dienendes personenindividuelles und ebenfalls digital codiertes Sprachmuster dieses Begriffes gespeichert ist,
**dadurch gekennzeichnet,**
daß das Mikrophon und die ID-Chipkartenleseeinrichtung (K) mit einem am Zugangsort befindlichen digitalen Endgerät (E) verbunden oder Teile desselben sind, daß das digitale Endgerät (E) gemeinsam mit weiteren solcher Endgeräte mit einer zur Durchführung des Vergleiches vorgesehenen zentralen Auswerteeinrichtung (Z) verbindbar ist, daß für die Verbindung der digitalen Endgeräte (E) mit der zentralen Auswerteeinrichtung (Z) Leitungen mit jeweils einem Signalisierungskanal und wenigstens einem Nutzdatenkanal vorgesehen sind und daß zur Gewinnung von Sprachpegelwerten aus dem vom Mikrophon abgegebenen Sprachsignal eine definierte Abtastfrequenz vorgesehen ist und die Sprachpegelwerte nach Zwischenspeicherung im digitalen Endgerät (E) mit einer kleineren, vorzugsweise der halben Abtastfrequenz entsprechenden Ausleserate an die zentrale Auswerteeinrichtung (Z) übertragbar sind.

2. Anordnung nach Anspruch 1,
**dadurch gekennzeichnet,**
daß die Verbindung des digitalen Endgerätes (E) mit der zentralen Auswerteeinrichtung (Z) durch eine ISDN-Verbindung realisiert ist.

3. Anordnung nach Anspruch 1 oder 2,
**dadurch gekennzeichnet,**
daß das digitale Endgerät (E) ein Fernsprechendgerät ist.

Europäisches
Patentamt

**EUROPÄISCHER
RECHERCHENBERICHT**

Nummer der Anmeldung

**EP 90 11 2784**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 643 838 (TELENORMA)<br>* Figuren 1,2; Spalte 2, Zeilen 35-60; Spalte 3, Zeilen 54-64 *<br>– – – | 1-3 | G 07 C 9/00<br>G 10 L 5/06<br>G 07 F 7/10 |
| Y | DE-A-3 129 282 (SIEMENS)<br>* Anspruch; Seite 7, Zeile 1 - Seite 8, Ziele 7 *<br>– – – | 1-3 | |
| Y,D | US-A-4 827 518 (T.C. FEUSTEL et al.)<br>* Figur 1; Zusammenfassung; Spalte 5, Zeile 66 - Spalte 6, Zeile 8 *<br>– – – | 1-3 | |
| A | DE-A-3 519 915 (TELEFONBAU UND NORMALZEIT)<br>* Figur; Zusammenfassung; Seite 5, Zeilen 20-29; Seite 6, Zeilen 21-36; Seite 7, Zeile 34 - Seite 8, Zeile 4 *<br>– – – | 1 | |
| A | DE-A-3 708 001 (TELENORMA)<br>* Spalte 2, Zeilen 23-45,56-63; Spalte 4, Zeilen 17-24 *<br>– – – – – | 1 | |

|  |
|---|
| **RECHERCHIERTE SACHGEBIETE (Int. Cl.5)**<br><br>G 07 C<br>H 04 M<br>G 10 L<br>G 07 F |

Der vorliegende Recherchenbericht wurde für alle Patentansprüche erstellt

| Recherchenort | Abschlußdatum der Recherche | Prüfer |
|---|---|---|
| Berlin | 16 Oktober 90 | FRITZ S C |